(19) **Europäisches Patentamt / European Patent Office / Office européen des brevets**

(11) **EP 4 648 137 A1**

(12) **EUROPEAN PATENT APPLICATION**

(43) Date of publication:
**12.11.2025 Bulletin 2025/46**

(21) Application number: **25168063.3**

(22) Date of filing: **02.04.2025**

(51) International Patent Classification (IPC):
**H01M 4/58** (2010.01)  **H01M 4/136** (2010.01)
**H01M 4/62** (2006.01)  **H01M 10/0525** (2010.01)
**H01M 4/02** (2006.01)

(52) Cooperative Patent Classification (CPC):
**H01M 4/5825; H01M 4/136; H01M 4/625;**
**H01M 10/0525;** H01M 2004/021; H01M 2004/026;
H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **22.04.2024 KR 20240053531**

(71) Applicant: **Samsung SDI Co., Ltd.**
**Yongin-si, Gyeonggi-do 17084 (KR)**

(72) Inventors:
• **KIM, Young-Ki**
**Yongin-si, 17084 (KR)**
• **CHOI, Aram**
**Yongin-si, 17084 (KR)**
• **KIM, Sangmi**
**Yongin-si, 17084 (KR)**
• **DOO, Sungwook**
**Yongin-si, 17084 (KR)**
• **KANG, Gwiwoon**
**Yongin-si, 17084 (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, POSITIVE ELECTRODE CONTAINING THE SAME, AND RECHARGEABLE LITHIUM BATTERY INCLUDING THE SAME**

(57)   A positive electrode active material includes a first particle containing a compound represented by Formula 1 below and having a first average particle diameter, wherein a total doping amount of Mg and Ti is about 500 ppm to about 3000 ppm, and a doping amount of Ti/a doping amount of Mg>1:

Formula 1    $Li_aFe_xMg_yTi_zPO_{4-c}$

where, in Formula 1 above, $0.8 < a \leq 1.2$, $0.900 \leq x \leq 0.998$, $0.001 \leq y \leq 0.05$, $0.001 \leq z \leq 0.05$, $0 \leq c \leq 0.05$, and $x + y + z = 1$.

FIG. 6

EP 4 648 137 A1

## Description

### BACKGROUND

One or more aspects of embodiments of the present disclosure herein are directed toward to a positive electrode active material for a rechargeable lithium battery, a positive electrode containing the positive electrode active material, and a rechargeable lithium battery including the positive electrode, and, for example, to a positive electrode active material containing an olivine-based lithium compound, a positive electrode including the positive electrode active material, and a rechargeable lithium battery including the positive electrode.

Recently, with the rapid rise in the use of battery-powered electronic devices (such as mobile phones and/or laptop computers), and/or electric vehicles, the demand for rechargeable batteries with relatively high energy density and high capacity has rapidly increased. Accordingly, efforts to improve performance of rechargeable batteries, such as a rechargeable lithium battery, have been ongoing.

A rechargeable lithium battery includes a positive electrode and a negative electrode containing active materials capable of intercalation and deintercalation of lithium ions, and an electrolyte solution. Electrical energy is produced by oxidation and reduction reactions when the lithium ions are intercalated into and deintercalated from the positive and negative electrodes.

### SUMMARY

One or more aspects of embodiments of the present disclosure are directed toward a positive electrode active material with (having) high (or improved) energy density, suitably high operating voltage, and high (or improved) conductivity.

One or more aspects of embodiments of the present disclosure are directed toward a rechargeable lithium battery with (having) high (or improved) energy density, suitably high operating voltage, high (or improved) charge-discharge efficiency, improved low-temperature characteristics, and long (or improved) lifespan.

One or more embodiments of disclosure provide a positive electrode active material including a first particle containing a compound represented by Formula 1, and having a first average particle diameter, wherein a total doping amount of Mg and Ti is about 500 ppm to about 3000 ppm, and a doping amount of Ti/a doping amount of Mg>1 (a ratio of the doping amount of Ti to the doping amount of Mg is greater than 1).

$$\text{Formula 1} \qquad Li_aFe_xMg_yTi_zPO_{4-c}.$$

In Formula 1, $0.8 < a \leq 1.2$, $0.900 \leq x \leq 0.998$, $0.001 \leq y \leq 0.05$, $0.001 \leq z \leq 0.05$, $0 \leq c \leq 0.05$, and $x + y + z = 1$.

In one or more embodiments of the present disclosure, a positive electrode for a rechargeable lithium battery includes a positive electrode current collector, and a positive electrode active material layer on the positive electrode current collector, and the positive electrode active material layer includes the positive electrode active material, a conductive material, and a binder.

In one or more embodiments of the present disclosure, a rechargeable lithium battery includes a positive electrode, a negative electrode, a separator, and an electrolyte solution, and the positive electrode includes the positive electrode active material.

At least some of the above and other features of the invention are set out in the claims.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:

FIG. 1 is a simplified conceptual diagram illustrating a rechargeable lithium battery according to one or more embodiments of the present disclosure;
FIGS. 2-5 are schematic views each illustrating a rechargeable lithium battery according to one or more embodiments, FIG. 2 shows a cylindrical battery, FIG. 3 shows a prismatic battery, and FIGS. 4 and 5 show a pouch-type (or kind) battery;
FIGS. 6 and 7 are each an enlarged view of a positive electrode active material layer of a rechargeable lithium battery according to one or more embodiments of the present disclosure;
FIG. 8 is a flowchart showing a preparation method of a positive electrode active material according to one or more embodiments of the present disclosure; and

FIGS. 9 and 10 are scanning electron microscope (SEM) images of positive electrode active materials according to one or more embodiments of the present disclosure.

**DETAILED DESCRIPTION**

In order to fully understand the configuration and effect of the present disclosure, embodiments of the present disclosure will be described in more detail with reference to the accompanying drawings. The present disclosure may, however, be embodied in one or more suitable forms and should not be construed as limited to one or more embodiments set forth herein, and one or more suitable changes and modifications can be made. Rather, these embodiments are provided so that this disclosure will be thorough and complete, and will fully convey the scope of the present disclosure to those skilled in the art to which the present disclosure pertains.

In this specification, it will be understood that, if (e.g., when) an element is referred to as being on another element, the element may be directly on the other element or intervening elements may be present therebetween. In contrast, if an element is referred to as being directly on another element, no intervening elements are present therebetween.

In the drawings, thicknesses of components are exaggerated for clarity and to assist in explaining the technical contents. Like reference numerals and/or symbols refer to like elements throughout the specification, and duplicative descriptions thereof may not be provided.

The singular forms are intended to include the plural forms as well, unless the context clearly indicates otherwise. In addition, unless otherwise specially noted, the phrases "A or B" and "A and/or B" may indicate "A but not B", "B but not A", or "A and B". The terms "comprises/includes" and/or "comprising/including" used in this specification do not exclude the presence or addition of one or more other components.

In this specification, "combination thereof" may refer to a mixture, a stack, a composite, a copolymer, an alloy, a blend, and/or a reaction product of components.

Unless otherwise defined in this specification, a particle diameter may be an average particle diameter. Also, the particle diameter may refer to an average particle diameter (D50) which refers to a diameter of particles at a cumulative volume of about 50 vol% in a particle size distribution. The average particle diameter (D50) may be measured by any suitable method, for example, may be measured by a particle size analyzer, or may also be measured using a transmission electron microscope (TEM) image and/or a scanning electron microscope (SEM) image. In one or more embodiments, the average particle diameter is measured by a measuring device using dynamic light-scattering, wherein the number of particles is counted for each particle size range by performing data analysis, and an average particle diameter (D50) value may then be obtained by calculation therefrom. Also, the average particle diameter may be measured using a laser diffraction method. When measured by the laser diffraction method, specifically, after dispersing particles to be measured in a dispersion medium, the dispersion medium is introduced into a commercial laser diffraction particle size measurement instrument (e.g., Micro-Trak MT-3000™) and irradiated with ultrasonic waves of about 28 kHz at an output of about 60 W, and the average particle diameter (D50) based on about 50% of particle size distribution in the measurement instrument may then be calculated. In the present specification, when particles are spherical, "diameter" or "size" indicates a particle diameter, and when the particles are non-spherical, the "diameter" or "size" indicates a major axis length.

It will be understood that, although the terms first, second, etc. may be used herein to describe various elements, these elements should not be limited by these terms. These terms are only used to distinguish one element from another element. Thus, a first element could be termed a second element without departing from the teachings of the present invention. Similarly, a second element could be termed a first element.

As used herein, the terms "use," "using," and "used" may be considered synonymous with the terms "utilize," "utilizing," and "utilized," respectively.

As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Further, the use of "may" when describing embodiments of the present disclosure refers to "one or more embodiments of the present disclosure".

Spatially relative terms, such as "beneath," "below," "lower," "above," "upper," "bottom," "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

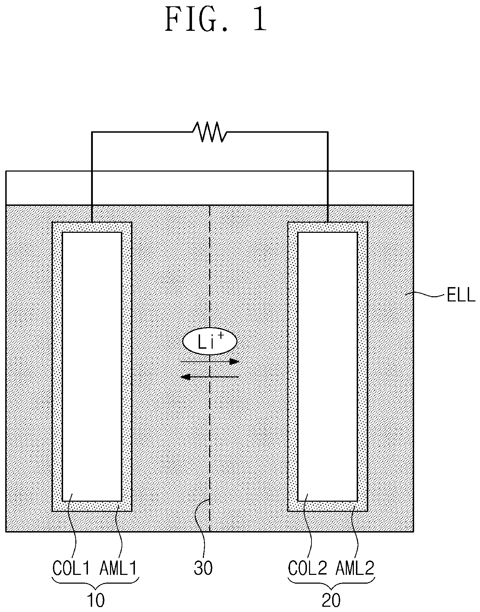

FIG. 1 is a simplified conceptual diagram showing a rechargeable lithium battery according to one or more embodiments of disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other with the separator 30 therebetween. The separator 30 may be arranged between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated with the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

**Positive Electrode 10**

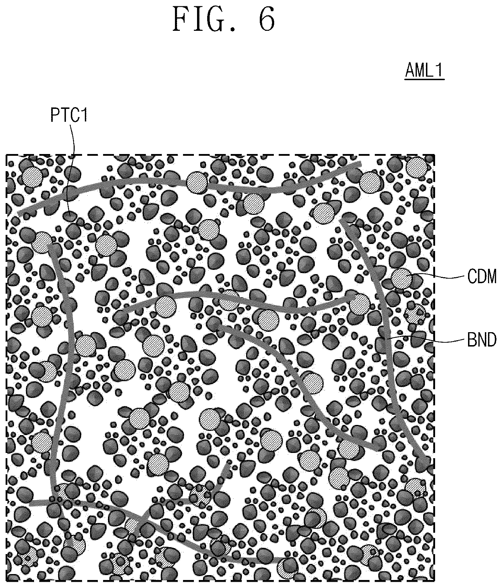

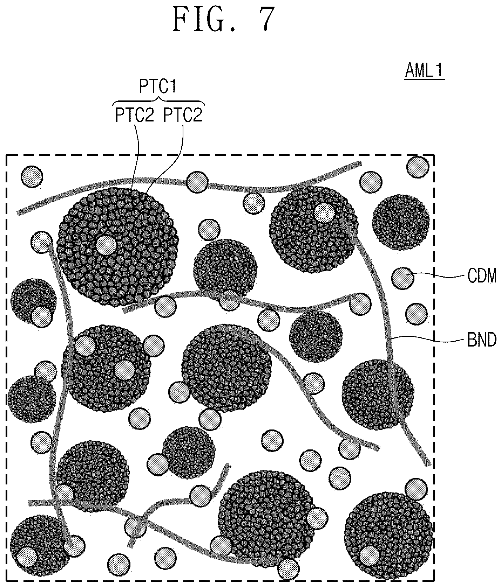

The positive electrode 10 for a rechargeable lithium battery includes a current collector COL1 and a positive electrode active material layer AML1 formed on the current collector COL1. The positive electrode active material layer AML1 includes a positive electrode active material and further includes a binder and a conductive material. The positive electrode active material layer AML1 according to one or more embodiments of the present disclosure will be described in more detail with reference to FIGS. 6 and 7. Aluminium (Al) may be used as the current collector COL1, but the present disclosure is not limited thereto.

**Negative Electrode 20**

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g. an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well or suitably to each other and also to attach the negative electrode active material well or suitably to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, and/or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be used to impart conductivity (e.g. electrical conductivity) to the electrode. Any material that does not cause chemical change (e.g. does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, and/or the like in a form of a metal powder and/or a metal fiber; a conductive polymer such as a polyphenylene derivative; and/or a (e.g., any suitable) mixture thereof.

The negative current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

**Negative Electrode Active Material**

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example, crystalline carbon, amorphous carbon, and/or a (e.g., any suitable) combination thereof. The crystalline carbon may be graphite such as non-shaped (e.g., randomly shaped), sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \le 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnO_y$ ($0 < y \le 2$), e.g., $SnO_2$, a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled (agglomerated), and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

**Separator 30**

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film may be a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on a surface (e.g., one or both (e.g., simultaneously) surfaces (e.g., opposite surfaces)) of the porous substrate.

The porous substrate may be a polymer film formed of any one selected from among polymer polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (TEFLON™), and/or may be a copolymer and/or mixture of two or more thereof.

The organic material may include a polyvinylidene fluoride-based polymer and/or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, Mg $(OH)_2$, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based solvent, an ester-based solvent, an ether-based solvent, a ketone-based solvent, and/or an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In addition, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB).

**Rechargeable Lithium Battery**

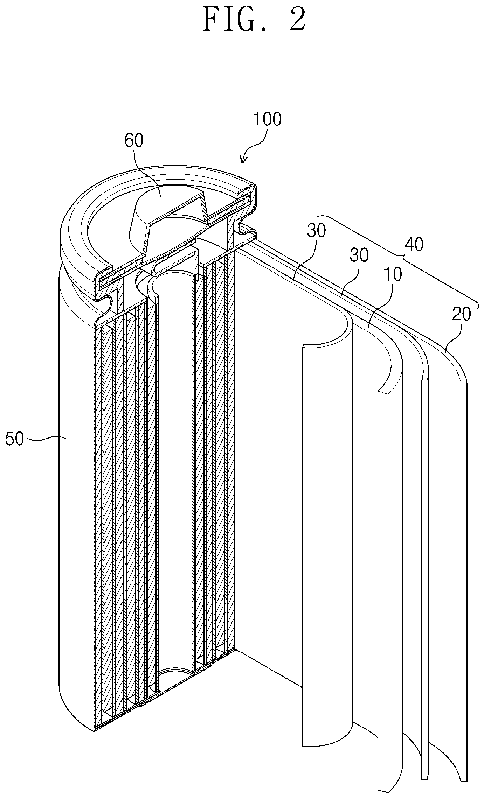

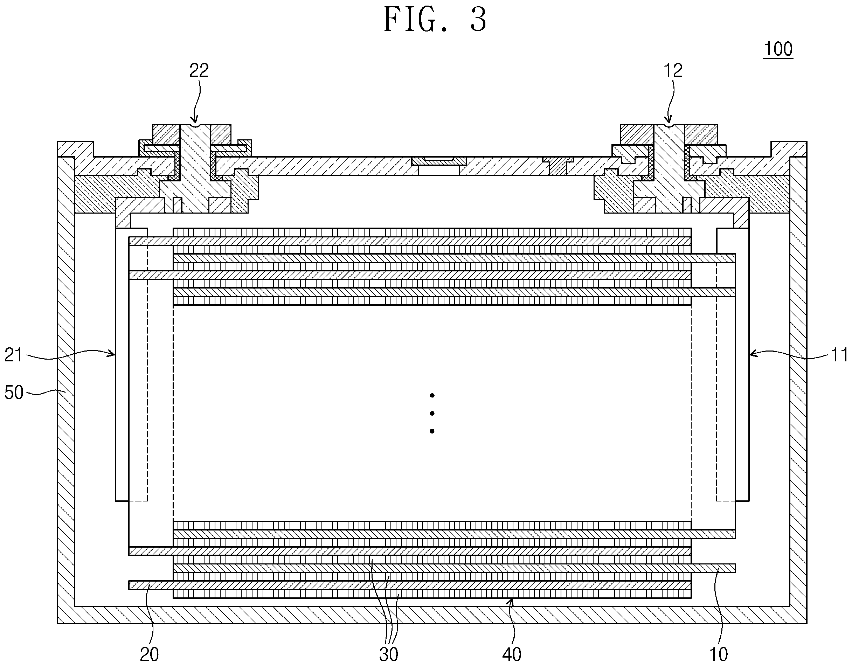

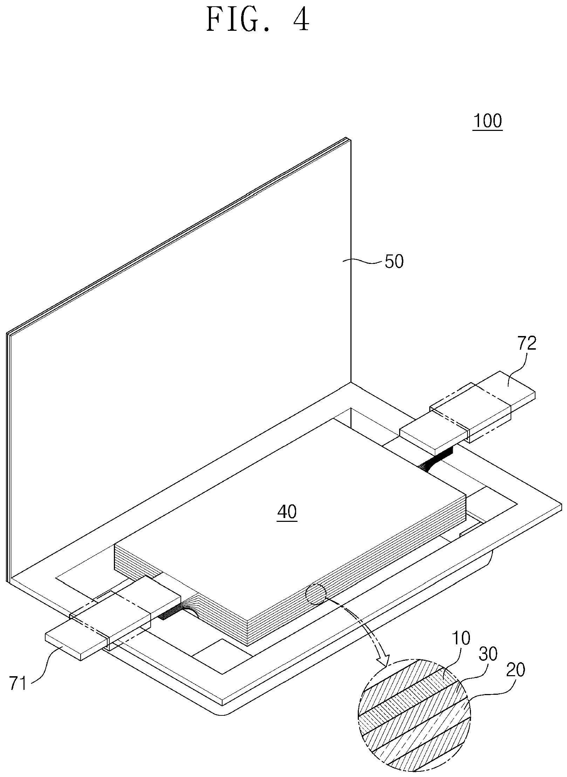

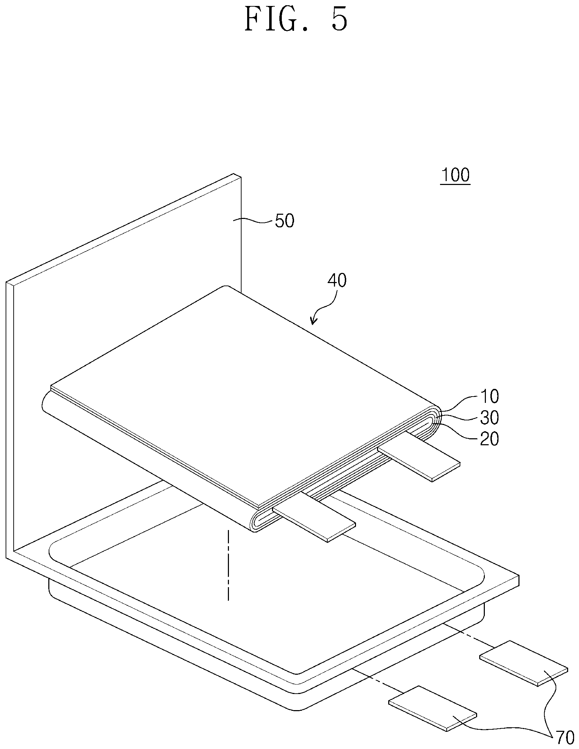

The rechargeable lithium battery may be classified into cylindrical, prismatic, pouch, or coin-type (kind) batteries, and/or the like depending on their shape. FIGS. 2 to 5 are schematic views illustrating a rechargeable lithium battery according to one or more embodiments. FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIGS. 6 and 7 are enlarged views of a positive electrode active material layer of a rechargeable lithium battery according to one or more embodiments of the present disclosure. Referring to FIGS. 6 and 7, the positive electrode active material layer AML1 (see FIG. 1) includes a first particle PTC1, a conductive material (e.g., electron conductor) CDM, and a binder BND. A plurality of first particles PTC1 may constitute a positive electrode active material according to one or more embodiments of the present disclosure.

The positive electrode active material layer AML1 may further include an additive that may serve as a sacrificial positive electrode.

An amount of the positive electrode active material first particle PTC1 in the positive electrode active material layer AML1 may be about 90 wt% to about 99 wt% with respect to 100 wt% of the positive electrode active material layer AML1. An amount of each of the binder BND and the conductive material CDM may be about 0.5 wt% to about 5 wt% with respect to 100 wt% of the positive electrode active material layer AML1.

The binder BND may bond the first particle PTC1 and the conductive material CDM to each other. For example, the binder BND may include at least one selected from the group consisting of polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, and nylon, but one or more embodiments of the present disclosure are not limited thereto.

The conductive material CDM may be used to improve conductivity of the positive electrode active material layer AML1. Any suitable conductive material that does not cause an undesirable chemical change of the positive electrode active material layer AML1 may be used, without limitation, as the conductive material CDM. Examples of the conductive material CDM may include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, and/or the like, in a form of a metal powder and/or a metal fiber; a conductive polymer such as a polyphenylene derivative; and/or a (e.g., any suitable) mixture thereof.

Hereinafter, the first particle PTC1 will be described in more detail.

**First Particle PTC1**

The first particle PTC1 may include an olivine-based lithium compound represented by Formula 1.

$$\text{Formula 1} \qquad Li_aFe_xMg_yTi_zPO_{4-c}.$$

In Formula 1, $0.8 < a \leq 1.2$, $0.900 \leq x \leq 0.998$, $0.001 \leq y \leq 0.05$, $0.001 \leq z \leq 0.05$, $0 \leq c \leq 0.05$, and $x + y + z = 1$ is satisfied. Mg and Ti are dopants doped into the first particle PTC1. For example, y may be about 0.0025 to about 0.005 or about 0.002 to about 0.003, and z may be about 0.002 to about 0.006, 0.002 to about 0.045, or about 0.0035 to about 0.0045. At least one of Mg or Ti may control the sizes of primary particles to be substantially uniform, thereby improving charge-discharge efficiency and low-temperature and lifespan characteristics of a rechargeable lithium battery. The primary particle will be described in more detail as follows.

The total doping amount of Mg and Ti is about 500 ppm to about 3000 ppm, for example, about 1000 ppm to about 3000 ppm, about 1500 ppm to about 2600 ppm, about 1500 ppm to about 2000 ppm, or about 2000 ppm to about 2600 ppm. For example, the doping amount of Mg may be about 600 ppm, and the doping amount of Ti may be about 1000 ppm to about 2000 ppm. The doping amount may be defined as the weight of a doping element relative to the total weight of metals excluding lithium (that is, Fe, Mg, and Ti) of the olivine-based lithium compound represented by Formula 1.

The relationship of doping amount of Ti (ppm) /the doping amount of Mg (ppm)>1 is satisfied. That is, the doping amount of Ti is greater than the doping amount of Mg. For example, the doping amount of Ti/the doping amount of Mg may be greater than 1 and less than 5, greater than 1.5 and less than 3.5, greater than 1.5 and less than 2, or greater than 2 and less than 3.5.

When the total doping amount of Mg and Ti and the doping amount of Ti/the doping amount of Mg fall within any of the above-described ratio ranges, respectively, the charge-discharge efficiency and the low-temperature and lifespan characteristics of a rechargeable lithium battery may be improved.

In Formula 1, a relationship $z/y > 0.5$ may be satisfied. That is, the relationship of number of moles of doped Ti /the number of moles of doped Mg >0.5 may be satisfied. For example, in Formula 1, $0.5 < z/y < 3.2$, $0.5 < z/y < 2$, $0.5 < z/y < 1$, or $1 < z/y < 2$ may be satisfied. When the value of z/y falls within any of the above-described ranges, the charge-discharge efficiency and the low-temperature and lifespan characteristics of a rechargeable lithium battery may be improved.

In Formula 1, the total average oxidation number of Mg and Ti may satisfy Expression 1.

## Expression 1

$$2.5 < (y \times 2 + z \times 4)/ (y + z) < 3.5$$

For example, the total average oxidation number of Mg and Ti may be $2.5 < (y \times 2 + z \times 4)/ (y + z) < 3$, or $3 < (y \times 2 + z \times 4)/ (y + z) < 3.5$. For example, if (e.g., when) the first particle PTC1 is a single particle to be described in more detail hereinbelow, $3 < (y \times 2 + z \times 4)/ (y + z) < 3.5$ may be satisfied. For example, if (e.g., when) the first particle is a secondary particle to be described in more detail hereinbelow, $2.5 < (y \times 2 + z \times 4)/ (y + z) < 3.5$ may be satisfied. When the result value of Expression 1 falls within any of the above-described ranges, the charge-discharge efficiency and the low-temperature and lifespan characteristics of a rechargeable lithium battery may be improved.

In one or more embodiments, the first particle PTC1 may include a coating layer on a surface thereof. The coating layer may cover the entire surface of the first particle PTC1, or may cover a portion of the surface of the first particle PTC1. For example, the coating layer may include carbon and/or a carbon-containing compound. The first particle PTC1 may have improved structural stability and electrical conductivity due to the coating layer.

The coating layer may further include at least one selected from the group consisting of a titanium-containing compound, a magnesium-containing compound, and a vanadium-containing compound. A metal-containing compound, such as the titanium-containing compound, the magnesium-containing compound, and/or the vanadium-containing compound, may be, for example, a metal oxide, a metal hydroxide, a metal carbonate, or a composite or mixture thereof. The metal-containing compound may further include another metal and/or non-metal element. For example, the metal-containing compound may further include lithium.

The first particle PTC1 may further include carbon derived from the coating layer. An amount of carbon element in the first particle PTC1 may be about 0.5 wt% to about 10 wt%, about 1 wt% to about 3 wt%, or about 1.5 wt% to about 2.5 wt% based on 100 wt% of the first particle.

Because the positive electrode active material according to one or more embodiments of the present disclosure includes the first particle PTC1, pellet density, capacity, and energy density may be improved. In one or more embodiments, the pellet density of the positive electrode active material, according to one or more embodiments, may be about 2.0 g/cc to about 2.5 g/cc, or about 2.4 g/cc to about 2.5 g/cc.

The first particle PTC1 has a first average particle diameter. The first average particle diameter may vary according to one or more embodiments (e.g., as illustrated in FIG. 6 and/or FIG. 7).

In one or more embodiments, referring to FIG. 6, the first particle PTC1 may have a single-particle form. In this specification, the single particle may refer to one particle that exists alone (e.g., not agglomerated with other particles) and without a grain boundary therein. In terms of morphology, the single particle may refer to one particle, a monolith structure, a single unitary structure, or a non-aggregated (e.g., non-agglomerated) particle, existing as an independent phase in which particles do not aggregate (or agglomerate) with each other. For example, the single particle may be a single crystal. In one or more embodiments, the single particle may be a particle containing a few crystals (e.g., the single particle may contain more than one crystal therein, but without it being a polycrystalline material). The single particle may be independently separated (e.g., may not be aggregated or agglomerated with other particles). As used herein, the term "single particle" may refer to about 2 to about 100 single particles bonded (e.g., attached or adjacent) to each other, for example, as illustrated in FIG. 6. For example, the first particle PTC1 may be provided in one or more suitable sizes. For example, the first particle PTC1 may have an average particle diameter (e.g., first average particle diameter) of about 500 nm to about 2.5 μm, for example, about 1 μm. The minimum particle diameter of the first particle PTC1 (e.g., the particle diameter of smaller first particles PTC1) may be about 100 nm to about 500 nm, or about 200 nm to about 300 nm. For example, the minimum particle diameter may refer to a value obtained by measuring (by a suitable method) diameters of about 30 primary particles (hereinafter, first primary particles) randomly selected from among an electron micrograph of a positive electrode active material. As used herein, "first primary particles" refer to the single particle first particles PTC1 whose size corresponds to the minimum particle diameter. Hereinafter, the average particle diameter of the first particle PTC1 will be described in more detail.

When the first particle PTC1 is a single particle, the average particle diameter of the first particle PTC1 may be about 500 nm to about 2.5 μm. For example, the average particle diameter of the first particle PTC1 may be about 1 μm. In one or more embodiments, the average particle diameter may be measured with a particle size analyzer. The average particle diameter may refer to a diameter (D50) of particles at a cumulative volume of about 50 vol% in a particle size distribution.

In other one or more embodiments, referring to FIG. 7, the first particle PTC1 may be in a form of a polycrystal, and may include (e.g., may be) a secondary particle in which at least two primary particles are aggregated (e.g., agglomerated). For example, one first particle PTC1 may include a plurality of second particles PTC2 that are aggregated (e.g.,

agglomerated) with each other. The second particles PTC2 may each be a primary particle (hereinafter, "second primary particle"). The first particle PTC1 may have a sphere or oval shape.

In one or more embodiments, the first particle PTC1 (e.g., as illustrated in FIG. 7) may further include a grain boundary coating layer on a surface of each of the second particles PTC2. The grain boundary coating layer may be present inside the first particle PTC1. The grain boundary coating layer may be formed by coating the second particles PTC2 along an interface between adjacent second particles PTC2 inside the first particle PTC1. For example, the grain boundary coating layer may refer to a material applied to the grain boundary inside the first particle PTC1. The grain boundary coating layer may include carbon and/or a carbon-containing compound. The grain boundary coating layer may further include at least one selected from the group consisting of a titanium-containing compound, a magnesium-containing compound, and a vanadium-containing compound.

The inside of the first particle PTC1 may refer to an entire inner portion of the first particle PTC1 except the surface of the first particle PTC1. For example, the inside of the first particle PTC1 may refer to an entire inner region at about 10 nm depth from the surface (e.g., outer peripheral surface) of the first particle PTC1, or a region from about 10 nm depth to about 2 $\mu$m depth.

Because the first particle PTC1 may further include a grain boundary coating part (or grain boundary coating layer), structural stability may be strengthened, and a coating layer (e.g., a surface coating layer) may be formed uniformly (e.g., substantially uniformly) on the surface of the first particle PTC1. In addition, because the first particle PTC1 may further include the grain boundary coating part, the electrical conductivity of the first particle PTC1 may be further improved.

The first particle PTC1 may further include carbon derived from the above-described coating layer (e.g., the surface coating layer) and/or the grain boundary coating layer. An amount of carbon (e.g., carbon element) in the first particle PTC1 may be about 0.5 wt% to about 10 wt%, about 1 wt% to about 3 wt%, or about 1.5 wt% to about 2.5 wt% based on 100 wt% of the first particle PTC1.

When the first particle PTC1 is a secondary particle, the average particle diameter of the first particle PTC1 (e.g., first average particle diameter) may be about 2 $\mu$m to about 15 $\mu$m, about 3 $\mu$m to about 10 $\mu$m, or about 3 $\mu$m to about 7 $\mu$m. For example, the average particle diameter of the first particle PTC1 may be about 5 $\mu$m. The average particle diameter of the first particle PTC1 may be larger than the average particle diameter of the second particle PTC2. In one or more embodiments, the average particle diameter may be measured with a particle size analyzer. The average particle diameter may refer to a diameter (D50) of particles at a cumulative volume of about 50 vol% in a particle size distribution.

The second particle PTC2 may have a particle diameter of about 200 nm or less. For example, the particle diameter of the second particle PTC2 may be about 10 nm to about 200 nm, about 20 nm to about 200 nm, about 50 nm to about 200 nm, or about 100 nm to about 200 nm. In one or more embodiments, the particle diameter may refer to a value obtained by measuring diameters of about 30 second particles PTC2 randomly selected from among an electron micrograph of a positive electrode active material. The particle diameters of the second particles PTC2 may be substantially uniform. The particle diameter of the second particle PTC2 may be smaller than the particle diameter of the first primary particle. For example, the particle diameter of the second particle PTC2 may be about 100 nm smaller than the particle diameter of the first primary particle.

When the average particle diameters of the first particle and the second particle fall within any of their above-described ranges, respectively, and the second particles have a substantially uniform size, the rechargeable lithium battery including the same may have improved charge-discharge capacity and improved low-temperature capacity.

The first particle PTC1 may have a sphere shape in which the nano-sized second particles PTC2 are aggregated (e.g., agglomerated). With the second particles PTC2 being closely aggregated (e.g., agglomerated) with each other, the first particle PTC1 may have the following characteristics. The first particle PTC1 may have a sphere or an oval shape. The average particle diameter (D50) of the first particle PTC1 may be about 2 $\mu$m to about 15 $\mu$m. The first particle PTC1 may have a porosity of about 20% to about 40%. The span value, obtained by analysis on the first particle PTC1 with a particle size analyzer, may be about 0.3 to about 0.75. Here, porosity (n) may be defined as the pore volume ($V_p$) divided by the total volume ($V_t$) of a particle, or

$$n = \frac{V_p}{V_t}$$

.

A rechargeable lithium battery including the positive electrode active material according to one or more embodiments of the present disclosure may have improved low-temperature characteristics. In one or more embodiments, a discharge capacity at about -20 °C compared with an initial discharge capacity (e.g., a ratio of discharge capacity at about -20 °C/initial discharge capacity) of the rechargeable lithium battery may be about 30% or more. For example, the discharge capacity at about -20 °C compared with the initial discharge capacity (e.g., a ratio of discharge capacity at about -20 °C/initial discharge capacity) of the rechargeable lithium battery, according to one or more embodiments of the present disclosure, may be about 30% to about 100%, about 30% to about 70%, or about 50% to about 60% (e.g., at least about 40%).

The rechargeable lithium battery including the positive electrode active material according to one or more embodiments of the present disclosure may have improved operating voltage. In one or more embodiments, the operating voltage of the rechargeable lithium battery, according to one or more embodiments of the present disclosure, may range from about 3 V to about 5 V. For example, the operating voltage may range from about 3 V to about 4.5 V, or from about 3.5 V to about 4 V.

The rechargeable lithium battery including the positive electrode active material, according to one or more embodiments, may have improved lifespan characteristics. In one or more embodiments, the rechargeable lithium battery according to one or more embodiments of the present disclosure may have a capacity retention rate of at least about 98% after about 50 cycles of charging and discharging with a constant current of about 1.0 C at the above-described voltage. For example, the capacity retention rate may be about 98% to about 100%, or about 99.8% to about 100%.

The present disclosure relates to a positive electrode active material for rechargeable lithium batteries, specifically focusing on the first particle PTC1, which can exist in either a single-particle form or a secondary particle form. In the single-particle form, PTC1 is characterized by its non-agglomerated structure, potentially existing as a single crystal or a few crystals without internal grain boundaries. This form typically has an average particle diameter ranging from 500 nm to 2.5 $\mu$m, enhancing the battery's charge-discharge efficiency and lifespan due to its uniform particle size and structural stability. In contrast, the secondary particle form of PTC1 is composed of aggregated primary particles, that may be referred to as second particles PTC2, which have diameters between 10 nm and 200 nm. These secondary particles form larger structures with average diameters from 2 $\mu$m to 15 $\mu$m and exhibit a porosity of 20% to 40%. The aggregation of the nano-sized second particles PTC2 into a spherical or oval shape improves the battery's low-temperature performance and operating voltage, contributing to higher energy density and better lifespan characteristics. The inclusion of coating layers, both on the surface and at grain boundaries, further enhances the structural stability and electrical conductivity of the material.

**Positive Electrode Active Material Slurry**

A positive electrode active material slurry according to one or more embodiments of the present disclosure may include the positive electrode active material first particle PTC1, the conductive material CDM, the binder BND, as described herein, and a solvent. Hereinafter, for the convenience of description, the same contents as those described with reference to FIGS. 6 and 7 are not provided again, and the differences are mainly described in more detail.

In one or more embodiments, the positive electrode active material slurry may have a viscosity of about 7000 mPa·s or less. For example, the viscosity of the positive electrode active material slurry may be about 1000 mPa·s to about 7000 mPa·s, about 2000 mPa·s to about 6000 mPa·s, or about 3000 mPa·s to about 4000 mPa·s. When the viscosity of the positive electrode active material slurry falls within any of the above-described ranges, a positive electrode active material layer AML1 may be easily or suitably bound to a current collector COL1.

For example, if (e.g., when) the first particle PTC1 is a secondary particle, the positive electrode active material slurry, according to one or more embodiments of the present disclosure, may have a desired or suitable viscosity while containing solids in a relatively large (or increased) amount. For example, the positive electrode active material slurry may contain about 60% to about 70% solids. The total solid content (e.g., amount) may refer to a converted value to percentage of the weight of a solid material, remaining after solvent evaporation (that is, weight of a dried mixture and current collector), with respect to the total weight of the current collector applied with the positive electrode active material slurry in preparation of an electrode. The solids may include a positive electrode active material, a binder, and a conductive material. When the total solid content (e.g., amount) falls within the above-described range, the first particle PTC1 may have excellent or suitable binding force for an electrode current collector.

The first particle PTC1 may be bound to the current collector COL1 (see FIG. 1), and the binder BND may improve binding force between the first particle PTC1 and the current collector COL1.

For example, if (e.g., when) the first particle PTC1 is a single particle, the positive electrode active material slurry, according to one or more embodiments of disclosure, may contain a relatively large amount of the binder BND in preparation of a full-cell. For example, if the first particle PTC1 has an extremely small (e.g., nano-sized) first average particle diameter, the amount of the binder BND in the positive electrode active material layer AML1 may be relatively large in order to secure binding force in a desired or suitable range between the first particle PTC1 and the current collector COL1 in the manufacture of the full-cell. For example, the amount of the binder BND may be about 2 wt% to about 5 wt%, or about 3 wt% to about 5 wt% with respect to 100 wt% of the positive electrode active material layer AML1.

For example, if (e.g., when) the first particle PTC1 is a secondary particle, the positive electrode active material slurry according to one or more embodiments of the present disclosure may contain a relatively small amount of the binder BND in the preparation of the full-cell. For example, because the first particle PTC1 has a relatively large first average particle diameter, the amount of the binder BND in the positive electrode active material layer AML1 may be relatively small in order to secure binding force in a desired or suitable range between the first particle PTC1 and the current collector COL1 in the manufacture of the full-cell. For example, the amount of the binder BND may be about 0.5 wt% to about 3 wt%, or about 0.5 wt% to about 2 wt% with respect to 100 wt% of the positive electrode active material layer AML1. For example, in the manufacture of the full-cell, smaller amount of the binder BND may be desired or required if (e.g., when) the first particle PTC1 is a secondary particle than if (e.g., when) the first particle PTC1 is a single particle. Accordingly, resistance of the rechargeable lithium battery, including the first particle PTC1 that is a secondary particle (is in the form of a secondary particle), may be reduced.

**Preparation Method of Positive Electrode Active Material**

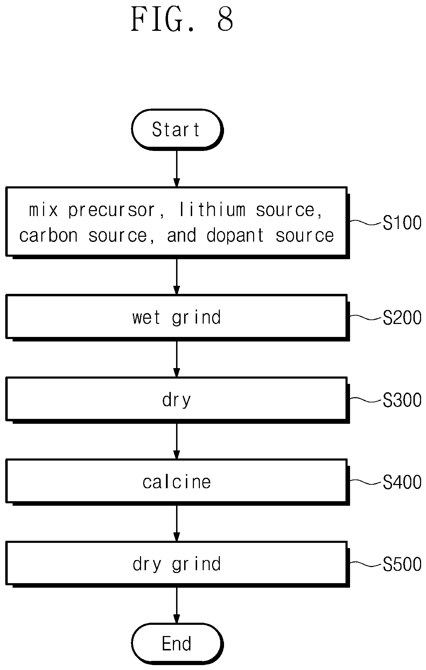

FIG. 8 is a flowchart showing a preparation method of a positive electrode active material according to one or more embodiments of the present disclosure. Referring to FIG. 8, the preparation method of a first particle PTC1 according to one or more embodiments of the present disclosure will be described in more detail.

An iron phosphate precursor, a lithium source, a carbon source, and a dopant source may be added in a solvent and mixed (S100). For example, the solvent may be water, ethanol, and/or the like. The iron phosphate precursor may be a compound containing both (e.g., simultaneously) iron (Fe) and phosphorus (P), and/or a (e.g., any suitable) mixture of an iron (Fe)-containing compound and a phosphorus (P)-containing compound. For example, the iron phosphate precursor may include $FePO_4 \cdot H_2O$ and/or a (e.g., any suitable) mixture of $FeSO_4$ and $H_3PO_4$. For example, the iron phosphate precursor may include $FePO_4$ and/or a (e.g., any suitable) mixture of $FeSO_4$ and $H_3PO_4$.

The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, lithium hydrogen phosphate, lithium dihydrogen phosphate, and lithium citrate.

The carbon source may include at least one selected from the group consisting of glucose, sucrose, fructose, cellulose, starch, citric acid, polyacrylic acid, polyethylene glycol, and dopamine.

The dopant source may include a dopant metal-containing oxide and/or a dopant metal-containing chloride. For example, the dopant source may include at least one selected from the group consisting of Mg-containing oxide, Mg-containing chloride, Ti-containing oxide, and Ti-containing chloride (e.g., the dopant source may be a precursor to the Mg and Ti dopants in Formula 1). For example, the dopant source may include at least one of the Mg-containing oxide or the Mg-containing chloride, and at least one of the Ti-containing oxide or the Ti-containing chloride.

Wet grinding may be performed on the mixture (S200). For the wet grinding, a suitable wet mill capable of temperature control may be used. For example, at least one selected from a beads mill, a ball mill, an attrition mill, an apex mill, a super mill, and a basket mill may be used for the wet grinding. Through the wet grinding process, particles in the mixture may be ground to a fine (e.g., suitably small) size.

According to one or more embodiments of the present disclosure, the wet grinding (S200) may also not be provided (e.g., may not be performed). In particular, in order to maximize or increase the average particle diameter of the first particle PTC1 to be prepared, the wet grinding (S200) of precursor particles may also not be provided (e.g., may not be performed).

The solvent may be removed from the mixture to form a dried mixture (S300).

When preparing the first particle PTC1 in FIG. 6, according to one or more embodiments of the present disclosure, the forming of the dried mixture may include performing direct evaporation on the mixture. For example, the direct evaporation may include static drying and/or spray drying.

When preparing the first particle PTC1 in FIG. 7, according to one or more embodiments of the present disclosure, the forming of the dried mixture may include performing the spray drying on the mixture. Any suitable spray-drying device may be used for the spray drying. For example, the spray drying may be performed by using at least one selected from among an ultrasonic spray-drying device, an air nozzle spray-drying device, an ultrasonic nozzle spray-drying device, a filter expansion droplet-generating device, and an electrostatic spray-drying device.

The particles, finely reduced to a size of a primary particle after the wet grinding process, may be aggregated (e.g., agglomerated) with each other through the spray drying process to thereby form a secondary particle. Therefore, by adjusting the flow rate and velocity of carrier gas, temperature, the residence time in a reactor, internal pressure, and/or the like during the spray drying process, the first particle PTC1 may be formed into the secondary particle of a desired or suitable size.

In one or more embodiments, the mixture to be spray-dried may have a total solid content (TSC) of about 20% to about 40%. The total solid content (e.g., amount) may refer to a value converted to percentage of the weight of a solid material remaining after solvent evaporation (that is, dried mixture) with respect to the total weight of the mixture (that is, spray liquid). For example, the spray liquid (e.g., the mixture to be spray-dried) may have a total solid content of about 30 wt%.

When the total solid content of the spray liquid (e.g., the mixture to be spray-dried) is less than about 20%, certain disadvantages may occur, for example, an average particle diameter of the first particle PTC1 may decrease and productivity may be reduced. When the total solid content is greater than about 40%, adjusting the average particle diameter of the first particle PTC1 may become difficult, and difference in size of the first particles PTC1 may increase.

The spray liquid according to one or more embodiments may have a viscosity of about 1500 mPa·s to about 2500 mPa·s with the above-mentioned total solid content. For example, the spray liquid may have a viscosity of about 2000 mPa·s. For example, viscosity may be measured at 25°C using a Brookfield rotational viscometer.

In one or more embodiments, an input rate for spray drying may be about 0.1 kg/min to about 0.9 kg/min. The input rate for spray drying may be defined as the weight of a solvent and raw material mixture added per minute. In one or more embodiments, the input rate for spray drying according to one or more embodiments may be about 0.5 kg/min.

In one or more embodiments, the spray drying may be performed at a temperature of about 100 °C to about 300 °C. For example, the spray drying may be performed at a temperature of about 200 °C to about 300 °C, at a temperature higher than about 200 °C and lower than or equal to about 300 °C, or at a temperature of about 230 °C to about 270 °C. Spray gas (for example, air), used for the spray drying, may be injected at a first temperature, and discharged at a second temperature. For example, the first temperature may be about 200 °C to about 250 °C. The second temperature may be about 80 °C to about 150 °C.

The spray liquid may have an input pressure of about 0.3 MPa to about 0.7 MPa. For example, the input pressure of the spray liquid may be about 0.5 MPa.

When the input rate, the input pressure, and the temperature for the spray drying fall within their respective above-described ranges, the first particle PTC1 may have spherical (or substantially spherical) shape and a desired or suitable porosity.

The spray liquid for the spray drying may have a flow velocity of about 30 mL/min to about 80 mL/min. When the flow velocity is less than about 30 mL/min, disadvantages of nozzle clogging, reduced productivity, and/or the like may be caused. When the flow velocity is greater than about 80 mL/min, due to moisture condensation in a spray-drying device, the mixture may not be dried completely or suitably. The spray liquid may have an input pressure of about 0.3 MPa to about 0.7 MPa. For example, the input pressure of the spray liquid may be about 0.5 MPa.

The dried mixture may be calcined in an inert atmosphere (S400). The inert atmosphere may be a nitrogen atmosphere and/or an argon atmosphere. The temperature at which the calcination process is performed may be about 500 °C to about 1000 °C, or about 600 °C to about 800 °C. The execution time of the calcination process may be about 4 hours to about 20 hours, or about 6 hours to about 12 hours. As the dried mixture is calcined, the first particle PTC1 containing the above-described compound in Formula 1 may be formed.

Dry grinding may be performed on the calcined first particle PTC1 (S500). The calcined mixture may be ground using an air jet mill, and/or the like.

In preparation of the first particle PTC1 in FIG. 6, according to one or more embodiments of the present disclosure, the calcined mixture may be ground at a rotation speed of at least about 7000 rpm. For example, the calcined mixture may be ground at a rotation speed of about 7000 rpm to about 10000 rpm, or about 7500 rpm to about 9000 rpm. Here, the first particle PTC1 may have a form of a single particle as illustrated in FIG. 6.

In preparation of the first particle PTC1 in FIG. 7, according to one or more embodiments of the present disclosure, the calcined mixture may be ground at a rotation speed of about 0 rpm to about 7000 rpm. For example, the calcined mixture may be ground at a rotation speed of about 4000 rpm to about 7000 rpm, about 4000 rpm to about 6000 rpm, or about 4500 rpm to about 5000 rpm. Unlike in the preparation of the positive electrode active material in FIG. 6, the grinding after calcination (S500) may be performed under relatively mild conditions. In the preparation of the positive electrode active material in FIG. 7, for example, the dry grinding (S500) may also not be performed. When the rotation speed in the grinding (S500) falls within any of the above-described ranges, the first particle PTC1 may be maintained to have a form of a secondary particle. Therefore, the first particle PTC1 may have a form of the secondary particle as illustrated in FIG. 7.

In the preparation method of the first particle PTC1 in FIG. 7, according to one or more embodiments of the present disclosure, a carbon source may be introduced to an iron phosphate precursor to form a carbon coating layer uniformly (e.g., substantially uniformly) on surfaces of primary particles (e.g., second primary particles). Thereafter, the primary particles (e.g., second primary particles) may be closely aggregated (e.g., agglomerated) through the spray drying to form a dense sphere-shaped secondary particle. As a result, the first particle PTC1 may include a stable carbon coating layer on the outside and inside of the first particle PTC1, and may thus have a relatively high carbon content (e.g., amount). Due to the high carbon content (e.g., amount) of the first particle PTC1 such as in FIG. 7, the positive electrode active material layer AML1 may have improved conductivity.

Analysis on a carbon element, according to one or more embodiments of the present disclosure, may be performed using an Elementar MICRO Cube elemental analyzer. The specific operation method and conditions may be as follows. A sample of 1 to 2 mg is weighed in a tin cup, loaded into an automatic sampling tray and transferred into a combustion tube through a ball valve, and the combustion is carried out at a combustion temperature of about 1000 °C. Subsequently, reduction of the combustion gas using reduced copper is carried out to form carbon dioxide. Carbon dioxide was detected using a thermal conductivity detector (TCD).

Scanning electron microscope-energy dispersive X-ray spectroscopy (SEM-EDS) and quantitative analyses on a particle surface were conducted to measure the carbon content (e.g., amount) according to one or more embodiments of the present disclosure. In addition to SEM-EDS, inductively coupled plasma-mass spectrometry (ICP-MS), inductively coupled plasma optical emission spectroscopy (ICP-OES), and/or the like may be used to measure the carbon content (e.g., amount).

Hereinafter, the present disclosure will be described in more detail with reference to examples. However, the following examples are merely presented to exemplify the present disclosure, and the scope of the present disclosure is not limited thereto.

### Example 1: Preparation of First Particle in Form of Single Particle

An iron phosphate precursor ($Fe_1PO_4 \cdot H_2O$), lithium carbonate, magnesium dioxide, and titanium dioxide were mixed in a molar ratio of Fe:Li:Mg:Ti of about 1:1.03:0.0025:0.004. 10 wt% of glucose was further added to the mixture. Wet grinding was performed on the mixture by ball milling. The mixture was dried over evaporation on a tray by heating, then dried in a vacuum oven at about 85 °C for about 4 hours. The dried mixture was calcined in a nitrogen atmosphere at about 650 °C for about 10 hours. The calcined product was ground at a rotation speed of about 8000 rpm to obtain a first particle in the form of a single particle. The average size of the first particle was about 1 $\mu$m. The formula of the first particle was $LiFe_{0.9935}Mg_{0.0025}Ti_{0.004}PO_4$. A ratio of a doping amount of Ti to a doping amount of Mg (a doping amount of Ti/a doping amount of Mg) was 3.33, and z/y was 1.6.

### Example 2: Preparation of First Particle in Form of Secondary Particle

An iron phosphate precursor ($Fe_1PO_4 \cdot H_2O$), lithium carbonate, magnesium dioxide, and titanium dioxide were mixed in a molar ratio of Fe:Li:Mg:Ti of about 1:1.03:0.0025:0.002. 10 wt% of glucose was further added to the mixture. The slurry mixture was dried over evaporation, through spray drying, under conditions of a spray pressure of about 0.5 MPa and a temperature of about 230 °C. The dried mixture was calcined in a nitrogen atmosphere at about 750 °C for about 10 hours to obtain a first particle in the form of a secondary particle. The average size of the second particle (e.g., the second primary particles forming the secondary particle first particle) was about 100 nm to about 200 nm. The formula of the first particle was $LiFe_{0.9955}Mg_{0.0025}Ti_{0.002}PO_4$. A doping amount of Ti/a doping amount of Mg was 1.67, and z/y was 0.8.

### Example 3: Preparation of First Particle in Form of Secondary Particle

An iron phosphate precursor ($Fe_1PO_4 \cdot H_2O$), lithium carbonate, magnesium dioxide, and titanium dioxide were mixed in a molar ratio of Fe:Li:Mg:Ti of about 1:1.03:0.0025:0.004, and the first particle was prepared in substantially the same manner as that of Example 2, except for the formula thereof being $LiFe_{0.9935}Mg_{0.0025}Ti_{0.004}PO_4$. A doping amount of Ti/a doping amount of Mg was 3.33, and z/y was 1.6.

In other words, Example 1 describes the preparation of the first particle PTC1 in a single-particle form. The process involves mixing an iron phosphate precursor, lithium carbonate, magnesium dioxide, and titanium dioxide in specific molar ratios, followed by drying (direct-evaporation), calcination, and grinding process at high speed of rotation. The resulting single particles have an average size of 1 $\mu$m and a formula of $LiFe_{0.9935}Mg_{0.0025}Ti_{0.004}PO_4$, with a Ti/Mg doping ratio of 3.33 and z/y ratio of 1.6.

Example 2 outlines the preparation of PTC1 in a secondary particle form. The same initial materials are mixed, but the slurry is dried via spray drying before calcination at a higher temperature. This results in secondary particles with primary particle sizes of 100 nm to 200 nm, and a formula of $LiFe_{0.9955}Mg_{0.0025}Ti_{0.002}PO_4$, with a Ti/Mg doping ratio of 1.67 and z/y ratio of 0.8.

Example 3 follows a similar method to Example 2 but with different molar ratios, producing secondary particles with a formula of $LiFe_{0.9935}Mg_{0.0025}Ti_{0.004}PO_4$ and the same doping ratios as in Example 1.

### Comparative Example 1: Preparation of First Particle in Form of Single Particle

An iron phosphate precursor ($Fe_1PO_4 \cdot H_2O$) and lithium carbonate were mixed in a molar ratio of Fe:Li of about 1:1.03, and the first particle was prepared in substantially the same manner as that of Example 1 except for the formula thereof being $LiFePO_4$. Each of a doping amount of Mg and a doping amount of Ti was 0.

### Comparative Example 2: Preparation of First Particle in Form of Single Particle

An iron phosphate precursor ($Fe_1PO_4 \cdot H_2O$), lithium carbonate, and magnesium dioxide were mixed in a molar ratio of Fe:Li:Mg of about 1:1.03:0.005, and the first particle was prepared in substantially the same manner as that of Example 1, except for the formula thereof being $LiFe_{0.995}Mg_{0.005}PO_4$. A doping amount of Mg was 600 ppm, and a doping amount of Ti was 0. A doping amount of Ti/a doping amount of Mg was 0, and z/y was 0.

**Comparative Example 3: Preparation of First Particle in Form of Single Particle**

An iron phosphate precursor ($Fe_1PO_4 \cdot H_2O$), lithium carbonate, and titanium dioxide were mixed in a molar ratio of Fe:Li:Ti of about 1:1.03:0.002, and the first particle was prepared in substantially the same manner as that of Example 1, except for the formula thereof being $LiFe_{0.998}Ti_{0.002}PO_4$. A doping amount of Ti was 1000 ppm, and a doping amount of Mg was 0.

**Comparative Example 4: Preparation of First Particle in Form of Single Particle**

An iron phosphate precursor ($Fe_1PO_4 \cdot H_2O$), lithium carbonate, and titanium dioxide were mixed in a molar ratio of Fe:Li:Ti of about 1:1.03:0.004, and the first particle was prepared in substantially the same manner as that of Example 1, except for the formula thereof being $LiFe_{0.996}Ti_{0.004}PO_4$. A doping amount of Ti was 2000 ppm, and a doping amount of Mg was 0.

**Comparative Example 5: Preparation of First Particle in Form of Secondary Particle**

An iron phosphate precursor ($Fe_1PO_4 \cdot H_2O$), lithium carbonate, and titanium dioxide were mixed in a molar ratio of Fe:Li:Ti of about 1:1.03:0.02, and the first particle was prepared in substantially the same manner as that of Example 2, except for the formula thereof being $LiFe_{0.998}Ti_{0.002}PO_4$. A doping amount of Ti was 1000 ppm, and a doping amount of Mg was 0.

**Comparative Example 6: Preparation of First Particle in Form of Single Particle**

An iron phosphate precursor ($Fe_1PO_4 \cdot H_2O$), lithium carbonate, magnesium dioxide, and titanium dioxide were mixed in a molar ratio of Fe:Li:Mg:Ti of about 1:1.03:0.005:0.005, and the first particle was prepared in substantially the same manner as that of Example 1, except for the formula thereof being $LiFe_{0.99}Mg_{0.005}Ti_{0.005}PO_4$. A doping amount of Ti/a doping amount of Mg was 2.08, and z/y was 1.

**Comparative Example 7: Preparation of First Particle in Form of Secondary Particle**

An iron phosphate precursor ($Fe_1PO_4 \cdot H_2O$), lithium carbonate, magnesium dioxide, and titanium dioxide were mixed in a molar ratio of Fe:Li:Mg:Ti of about 1:1.03:0.005:0.005, and the first particle was prepared in substantially the same manner as that of Example 2, except for the formula thereof being $LiFe_{0.99}Mg_{0.005}Ti_{0.005}PO_4$. A doping amount of Ti/a doping amount of Mg was 2.08, and z/y was 1.

**Comparative Example 8: Preparation of First Particle in Form of Single Particle**

An iron phosphate precursor ($Fe_1PO_4 \cdot H_2O$), lithium carbonate, magnesium dioxide, and titanium dioxide were mixed in a molar ratio of Fe:Li:Mg:Ti of about 1:1.03:0.0025:0.008, and the first particle was prepared in substantially the same manner as that of Example 1, except for the formula thereof being $LiFe_{0.9895}Mg_{0.0025}Ti_{0.008}PO_4$. A doping amount of Ti/a doping amount of Mg was 6.67, and z/y was 3.2.

**Comparative Example 9: Preparation of First Particle in Form of Secondary Particle**

An iron phosphate precursor ($Fe_1PO_4 \cdot H_2O$), lithium carbonate, magnesium dioxide, and titanium dioxide were mixed in a molar ratio of Fe:Li:Mg:Ti of about 1:1.03:0.0025:0.008, and the first particle was prepared in substantially the same manner as that of Example 2, except for the formula thereof being $LiFe_{0.9895}Mg_{0.0025}Ti_{0.008}PO_4$. A doping amount of Ti/a doping amount of Mg was 6.67, and z/y was 3.2.

**Preparation of Positive Electrode**

95 wt% of a final positive electrode active material, 3 wt% of a polyvinylidene fluoride binder, and 2 wt% of a carbon black conductive material were mixed in an N-methylpyrrolidone solvent to prepare a positive electrode active material slurry. The positive electrode active material slurry was applied to an aluminum current collector and dried, and then rolling was performed to prepare a positive electrode.

**Preparation of Rechargeable Lithium Battery**

The prepared positive electrode and a lithium metal counter electrode, as a counter electrode, were used to prepare a 2032-type (kind) coin half-cell. A separator (thickness: about 16 $\mu$m) formed of a porous polyethylene (PE) film was interposed between the positive electrode and the lithium metal counter electrode, and an electrolyte solution was introduced to prepare a rechargeable lithium battery. The electrolyte solution obtained by mixing $LiPF_6$ of 1.3 M in a mixed solvent containing ethylene carbonate (EC), ethylmethyl carbonate (EMC), and dimethyl carbonate (DMC) in a volume ratio of about 3:4:3 was used as an electrolyte.

Table 1

| Classifica tion | Form | Doping amount of Mg (ppm) | Doping amount of Ti (ppm) | Doped Mg (mol%) | Doped Ti (mol%) | Total average oxidation number of Mg and Ti |
|---|---|---|---|---|---|---|
| Example 1 | Single particle | 600 | 2000 | 0.25 | 0.4 | 3.23 |
| Example 2 | Seconda ry particle | 600 | 1000 | 0.25 | 0.2 | 2.89 |
| Example 3 | Seconda ry particle | 600 | 2000 | 0.25 | 0.4 | 3.23 |
| Compara tive Example 1 | Single particle | 0 | 0 | 0 | 0 | 0 |
| Compara tive Example 2 | Single particle | 600 | 0 | 0.5 | 0 | 2.00 |
| Compara tive Example 3 | Single particle | 0 | 1000 | 0 | 0.2 | 4.00 |
| Compara tive Example 4 | Single particle | 0 | 2000 | 0 | 0.4 | 4.00 |
| Compara tive Example 5 | Seconda ry particle | 0 | 1000 | 0 | 0.2 | 4.00 |
| Compara tive Example 6 | Single particle | 1200 | 2500 | 0.5 | 0.5 | 3.00 |
| Compara tive Example 7 | Seconda ry particle | 1200 | 2500 | 0.5 | 0.5 | 3.00 |
| Compara tive Example 8 | Single particle | 600 | 4000 | 0.25 | 0.8 | 3.52 |
| Compara tive Example 9 | Seconda ry particle | 600 | 4000 | 0.25 | 0.8 | 3.52 |

**Evaluation Example 1: Surface Analysis of Positive Electrode Active Material**

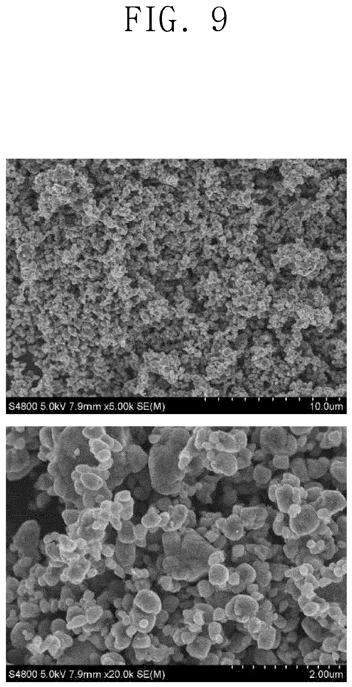

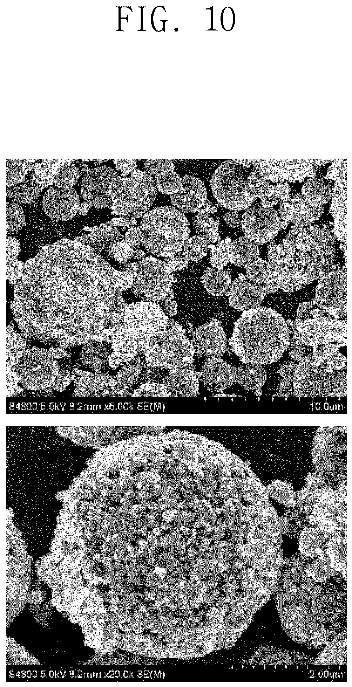

FIG. 9 shows a scanning electron microscope (SEM) image of the first particle prepared according to Example 1. FIG. 10 shows a SEM image of the first particle prepared according to Example 2. Referring to FIG. 9, it can be seen that the first particle according to Example 1 of the present disclosure has a form of a fine single particle. Referring to FIG. 10, it can be seen that the first particle according to Example 2 of the present disclosure has a form of a sphere-shaped secondary particle in which a plurality of primary particles (e.g., second primary particles) are aggregated (e.g., agglomerated). It can be seen that the second particle PTC2 according to Example 2 of the present disclosure has a form of a fine nano-sized primary particle. In one or more embodiments, referring to FIGS. 9 and 10, the primary second particle PTC2 according to Example 2 was smaller than the first primary particle (e.g., single particle) according to Example 1, and was substantially uniform.

**Evaluation Example 2: Evaluation on Active Material**

The pellet densities (PD) and carbon contents of the positive electrode active materials according to Examples 1 to 3 and Comparative Examples 1 to 9 were measured, and the results were listed in Table 2. The pellet density was measured and recorded within the range of 3.0000 g (with an error margin of $\pm$ 0.0004 g) for the positive electrode active material. The positive electrode active material was pressed using a 13 mm KBr Pellet Die at 4 tons of pressure for 30 seconds, after which the height reduction was measured and the weight per volume was determined.

Table 2

| Classification | Pellet density (g/cc) | Carbon content (wt%) |
|---|---|---|
| Example 1 | 2.41 | 1.52 |

(continued)

| Classification | Pellet density (g/cc) | Carbon content (wt%) |
|---|---|---|
| Example 2 | 2.44 | 1.83 |
| Example 3 | 2.45 | 1.84 |
| Comparative Example 1 | 2.40 | 1.50 |
| Comparative Example 2 | 2.42 | 1.53 |
| Comparative Example 3 | 2.43 | 1.48 |
| Comparative Example 4 | 2.41 | 1.47 |
| Comparative Example 5 | 2.46 | 1.81 |
| Comparative Example 6 | 2.43 | 1.47 |
| Comparative Example 7 | 2.41 | 1.84 |
| Comparative Example 8 | 2.38 | 1.46 |
| Comparative Example 9 | 2.37 | 1.79 |

Referring to Table 2, it can be seen that the positive electrode active materials according to Examples 1 to 3 of the present disclosure have similar or higher pellet densities and larger carbon contents as compared to the positive electrode active materials according to Comparative Examples 1 to 9. In particular, it can be seen that the positive electrode active material according to Example 1 has a similar or larger carbon content (e.g., amount) than the positive electrode active materials according to Comparative Examples 1 to 4, 6, and 8. It can be seen that the positive electrode active materials according to Examples 2 and 3 have the same or larger carbon contents as compared to the positive electrode active materials according to Comparative Examples 5, 7, and 9. It also can be seen that the positive electrode active materials according to Examples 2 and 3 have higher pellet densities and larger carbon contents than the positive electrode active material according to Example 1.

**Evaluation Example 3: Evaluation on Battery Characteristics**

Characteristics of rechargeable lithium batteries prepared using the positive electrode active materials according to Examples 1 to 3 and Comparative Examples 1 to 9 were evaluated.

An initial charging and discharging cycle of the rechargeable lithium battery was performed by initially charging under conditions of a constant current (0.1 C) and a constant voltage (3.8 V) (cut-off 0.05C) at 25 °C, followed by a rest for about 10 minutes and then discharging with a constant current (0.1 C) until a voltage reached 2.5 V. Thereafter, the charging and discharging cycles were repeated 50 times under about 1.0 C/1.0 C conditions. In addition, a coin cell was additionally manufactured and the batteries were initially charged at a constant current of 0.1 C and a constant voltage (3.8 V) (cut-off 0.05C), and after 10 minutes of rest, discharged up to 2.5 V at a constant current of 0.1 C, and measure the capacity at about -20 °C. The results of evaluating the battery characteristics were listed in Table 3.

Table 3

| Classificati on | Charge amount (mAh/g) at 3.8 V | Discharge amount (mAh/g) at 3.8 V | Efficiency (%) at 3.8 V | Capacity (mAh/g) at -20 °C | Lifespan (%) at 3.8 V/50 cycles |
|---|---|---|---|---|---|
| Example 1 | 165.2 | 155.8 | 94.3 | 55 | 98.1 |
| Example 2 | 165.6 | 164.0 | 99.0 | 94 | 99.8 |
| Example 3 | 165.4 | 163.8 | 99.0 | 92 | 100.1 |
| Comparati ve Example 1 | 164.1 | 156.1 | 95.1 | 43 | 94.3 |
| Comparati ve Example 2 | 163.5 | 155.8 | 95.3 | 45 | 95.6 |
| Comparati ve Example 3 | 163.5 | 155.0 | 94.8 | 56 | 96.9 |
| Comparati ve Example 4 | 164.3 | 156.2 | 95.1 | 58 | 97.2 |
| Comparati ve Example 5 | 165.5 | 164.2 | 99.2 | 95 | 99.6 |

(continued)

| Classification | Charge amount (mAh/g) at 3.8 V | Discharge amount (mAh/g) at 3.8 V | Efficiency (%) at 3.8 V | Capacity (mAh/g) at -20 °C | Lifespan (%) at 3.8 V/50 cycles |
|---|---|---|---|---|---|
| Comparative Example 6 | 162.3 | 152.9 | 94.2 | 41 | 95.2 |
| Comparative Example 7 | 163.5 | 160.4 | 98.1 | 89 | 97.1 |
| Comparative Example 8 | 161.2 | 151.9 | 94.2 | 42 | 93.6 |
| Comparative Example 9 | 163.4 | 159.4 | 97.6 | 92 | 95.3 |

Referring to Table 3, it can be seen that the rechargeable batteries according to Examples 1 to 3 have excellent low-temperature capacities and lifespan characteristics. In particular, it can be seen that the rechargeable battery according to Example 1 has a similar or higher discharge capacity at about -20 °C and longer lifespan as compared to the rechargeable batteries according to Comparative Examples 1 to 4, 6, and 8. It can be seen that the rechargeable batteries according to Examples 2 and 3 have similar or higher discharge capacities at about -20 °C and longer lifespans as compared to the rechargeable batteries according to Comparative Examples 5, 7, and 9.

In one or more embodiments, it can be seen that the rechargeable batteries according to Examples 2 and 3 have higher charge amounts than the rechargeable battery according to Example 1, and therefore, the rechargeable batteries according to Examples 2 and 3 have lower resistance.

A positive electrode active material according to one or more embodiments of the present disclosure may have improved electrical conductivity, mixture density (compression density, pellet density), capacity, and energy density. A rechargeable lithium battery according to one or more embodiments of the present disclosure may have relatively high operating voltage and charge-discharge efficiency, and improved low-temperature and lifespan characteristics.

A battery manufacturing device, a battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

Although one or more embodiments of the present disclosure have been described with reference to the accompanying drawings, it is understood that the present disclosure should not be limited to these embodiments but one or more suitable changes and modifications can be made by one ordinary skilled in the art within the scope of the present disclosure as hereinafter claimed by the following claims and their equivalents. Therefore, one or more embodiments described above should be understood in all respects as illustrative and not limiting.

## Claims

1.  A positive electrode active material comprising:

    a first particle,
    the first particle comprising a compound represented by Formula 1, and having a first average particle diameter,
    wherein a total doping amount of Mg and Ti is about 500 ppm to about 3000 ppm,
    a doping amount of Ti/a doping amount of Mg>1:

    Formula 1          $Li_aFe_xMg_yTi_zPO_{4-c}$, and

in Formula 1, $0.8 < a \leq 1.2$, $0.900 \leq x \leq 0.998$, $0.001 \leq y \leq 0.05$, $0.001 \leq z \leq 0.05$, $0 \leq c \leq 0.05$, and $x + y + z = 1$.

2. The positive electrode active material as claimed in claim 1, wherein, in Formula 1, $z/y > 0.5$.

3. The positive electrode active material of claim 1 or claim 2, wherein a total average oxidation number of Mg and Ti satisfies Expression 1:

Expression 1

$$2.5 < (y \times 2 + z \times 4)/(y + z) < 3.5.$$

4. The positive electrode active material as claimed in any one of claims 1 to 3,

wherein y is about 0.002 to about 0.003, and
z is about 0.0035 to about 0.0045.

5. The positive electrode active material as claimed in any one of claims 1 to 4,

wherein the first particle comprises a coating layer comprising carbon, and
an amount of carbon in the first particle is about 1.5 wt% to about 2.5 wt% based on 100 wt% of the first particle.

6. The positive electrode active material as claimed in any one of claims 1 to 5,

wherein the first particle is a single particle, and
the first average particle diameter is about 500 nm to about 2.5 $\mu$m.

7. The positive electrode active material as claimed in any one of claims 1 to 6,

wherein the first particle is a secondary particle that comprises a plurality of second particles aggregated with each other, and
the first average particle diameter is about 3 $\mu$m to about 10 $\mu$m.

8. The positive electrode active material as claimed in claim 7, wherein each of the plurality of second particles is a primary particle, and
each of the plurality of second particles has a particle diameter of about 200 nm or less.

9. The positive electrode active material as claimed in claim 7 or claim 8, wherein the first particle further comprises a grain boundary coating layer on an interface between adjacent second particles, and
the grain boundary coating layer comprises carbon.

10. The positive electrode active material as claimed in any one of claims 7 to 9, wherein the first particle has a porosity of about 20% to about 40%.

11. The positive electrode active material as claimed in any one of claims 7 to 10, wherein a span value, obtained by analysis of the first particle utilizing a particle size analyzer, is about 0.3 to about 0.75.

12. The positive electrode active material as claimed in any one of claims 1 to 11, wherein a pellet density of the positive electrode active material is about 2.0 g/cc to about 2.5 g/cc.

13. A positive electrode for a rechargeable lithium battery, the positive electrode comprising:

a positive electrode current collector; and
a positive electrode active material layer on the positive electrode current collector,
wherein the positive electrode active material layer comprises the positive electrode active material as claimed in any one of claims 1 to 12, a conductive material, and a binder.

14. The positive electrode as claimed in claim 13, wherein an amount of the binder is about 0.5 wt% to about 5 wt% with respect to 100 wt% of the positive electrode active material layer.

15. A rechargeable lithium battery comprising:

a positive electrode, a negative electrode, a separator, and an electrolyte solution,
wherein the positive electrode comprises the positive electrode active material as claimed in any one of claims 1 to 12.

# FIG. 1

# FIG. 2

# FIG. 3

EP 4 648 137 A1

# FIG. 4

# FIG. 5

# FIG. 6

AML1

PTC1

CDM

BND

# FIG. 7

# FIG. 8

```
                    ┌─────────────┐
                    │    Start    │
                    └─────────────┘
                           │
                           ▼
    ┌──────────────────────────────────────┐
    │   mix precursor, lithium source,     │ ──S100
    │   carbon source, and dopant source   │
    └──────────────────────────────────────┘
                           │
                           ▼
    ┌──────────────────────────────────────┐
    │              wet grind               │ ──S200
    └──────────────────────────────────────┘
                           │
                           ▼
    ┌──────────────────────────────────────┐
    │                 dry                  │ ──S300
    └──────────────────────────────────────┘
                           │
                           ▼
    ┌──────────────────────────────────────┐
    │              calcine                 │ ──S400
    └──────────────────────────────────────┘
                           │
                           ▼
    ┌──────────────────────────────────────┐
    │             dry grind                │ ──S500
    └──────────────────────────────────────┘
                           │
                           ▼
                    ┌─────────────┐
                    │     End     │
                    └─────────────┘
```

# FIG. 9

# FIG. 10

Europäisches
Patentamt
European
Patent Office
Office européen
des brevets

# EUROPEAN SEARCH REPORT

**Application Number**

EP 25 16 8063

## DOCUMENTS CONSIDERED TO BE RELEVANT

| Category | Citation of document with indication, where appropriate, of relevant passages | Relevant to claim |
|---|---|---|
| X | WO 2023/226372 A1 (HUBEI WANRUN NEW ENERGY TECH CO LTD [CN]) 30 November 2023 (2023-11-30) * see US2024391776A1 * & US 2024/391776 A1 (YANG JIAOJIAO [CN] ET AL) 28 November 2024 (2024-11-28) * paragraph [0078]; claims 1-11; example 4 * ----- | 1-15 |
| A | CN 116 259 736 A (NINGDE CONTEMPORARY AMPEREX TECH CO LTD ET AL.) 13 June 2023 (2023-06-13) * claims 1-18 * ----- | 1-15 |

**CLASSIFICATION OF THE APPLICATION (IPC)**

INV.
H01M4/58
H01M4/136
H01M4/62
H01M10/0525

ADD.
H01M4/02

**TECHNICAL FIELDS SEARCHED (IPC)**

H01M

The present search report has been drawn up for all claims

| Place of search | Date of completion of the search | Examiner |
|---|---|---|
| Munich | 12 September 2025 | Szekely, Noemi Kinga |

EPO FORM 1503 03.82 (P04C01)

## ANNEX TO THE EUROPEAN SEARCH REPORT
## ON EUROPEAN PATENT APPLICATION NO.

EP 25 16 8063

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2025

| Patent document cited in search report | Publication date | Patent family member(s) | | Publication date |
|---|---|---|---|---|
| WO 2023226372 A1 | 30-11-2023 | CN | 114804058 A | 29-07-2022 |
| | | US | 2024391776 A1 | 28-11-2024 |
| | | WO | 2023226372 A1 | 30-11-2023 |
| CN 116259736 A | 13-06-2023 | CN | 116259736 A | 13-06-2023 |
| | | CN | 118969975 A | 15-11-2024 |
| | | WO | 2024234544 A1 | 21-11-2024 |

EPO FORM P0459

For more details about this annex : see Official Journal of the European Patent Office, No. 12/82